Europäisches Patentamt

European Patent Office

Office européen des brevets

(11) Veröffentlichungsnummer: **0 320 624 B1**

(12) **EUROPÄISCHE PATENTSCHRIFT**

(45) Veröffentlichungstag der Patentschrift: **22.01.92**

(21) Anmeldenummer: **88118795.9**

(22) Anmeldetag: **11.11.88**

(51) Int. Cl.⁵: **B29C 37/04**, B23D 79/02, B23C 3/12

�**54** **Maschine zum Verputzen von Schweissraupen.**

(30) Priorität: **12.12.87 DE 3742182**

(43) Veröffentlichungstag der Anmeldung:
**21.06.89 Patentblatt 89/25**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**EP-A- 0 040 317**
**WO-A-86/04871**
**DE-A- 2 317 554**
**DE-A- 2 408 883**

(73) Patentinhaber: **Urban GmbH & Co. Maschinen-**
**bau KG**
**Dornierstrasse 5**
**W-8940 Memmingen(DE)**

(72) Erfinder: **Kreissl, Reinhard**
**Wagsberg 20**
**W-8941 Kronburg(DE)**
Erfinder: **Tesch, Wolfgang**
**Keltenstrasse 18**
**W-8941 Heimertingen(DE)**

(74) Vertreter: **Pfister, Helmut, Dipl.-Ing.**
**Buxacher Strasse 9**
**W-8940 Memmingen/Bayern(DE)**

## Beschreibung

Die Erfindung betrifft eine Maschine zum Verputzen von Schweißraupen, die beim Verschweißen von Kunststoffprofilen zu Fensterrahmen oder dergleichen entstehen, wobei die Verputzwerkzeuge auf beiden Seiten des Fensterrahmens parallel zu den Schweißraupen bewegbar sind, mit Einrichtungen zum Bewegen der Fensterrahmen in die einzelnen Bearbeitungspositionen und Einrichtungen zum Fixieren der Fensterrahmen in den Bearbeitungspositionen.

Wenn nachstehend im Zusammenhang mit der Erfindung von Fensterrahmen gesprochen wird, so ist dies nur beispielsweise zu verstehen. Mittels der erfindungsgemäßen Maschine können auch Rahmen für andere Zwecke, beispielsweise Türrahmen bearbeitet werden, wenn hierbei ebenfalls, wie bei Fensterrahmen, das Problem vorliegt, daß Schweißraupen zu bearbeiten sind.

Fensterrahmen werden in der Weise hergestellt, daß geeignete Kunststoffprofile auf Gehrung geschnitten werden, und daß beispielsweise vier Kunststoffprofile dann an den Ecken miteinander verschweißt werden. Beim Schweißvorgang entstehen Schweißraupen, daß beim Schweißen die einzelnen Rahmenteile gegeneinander gedrückt werden und das erweichte Kunststoffmaterial nach außen weggedrückt wird. Diese Schweißraupen müssen nachträglich bearbeitet, insbesondere beseitigt werden. Hierzu sind verschiedene Bearbeitungsmethoden bekannt. Beispielsweise können die Schweißraupen abgefräst werden. Es sind auch Messer bekannt, mittels derer die Schweißraupen abgestochen werden.

In der Regel geschieht das Bearbeiten der Schweißraupen in besonderen Maschinen, die eine solche Ausbildung aufweisen, daß sie jeweils geeignet sind, um eine Ecke eines Fensterrahmens zu bearbeiten. Für diese Bearbeitung ist es notwendig, den Fensterrahmen in geeigneter Position zu fixieren. Das Bearbeiten der Schweißraupen erfolgt dann weitgehend automatisch, wobei es möglich ist, durch geeignete Steuerungselemente vorzusehen, daß auch Profile unterschiedlicher Abmessungen ohne aufwendige Umstellarbeiten in der gleichen Maschine bearbeitet werden können.

Da ein Fensterrahmen normaler Ausbildung an allen vier Ecken bearbeitet werden muß, ist es notwendig, den Rahmen zu wenden, um jeweils eine Ecke in die Bearbeitungsposition zu bringen. Hierfür sind Vorrichtungen bekannt, die tischartig ausgebildet sind und auf denen der Rahmen gewendet werden kann. Zum Wenden sind mechanische Einrichtungen vorgesehen, die dafür sorgen, daß der Rahmen nacheinander mit seinen Ecken in die Bearbeitungsposition gebracht wird.

Da während des Wendemanövers keine Bearbeitung erfolgt, addiert sich die Zeit, die für das Wendemanöver notwendig ist, zu den Bearbeitungszeiten, die zum Verputzen der Schweißraupen in der Ecke erforderlich sind. Die Zeitspannen, die für die Wendemanöver notwendig sind, entsprechen fast den Zeitspannen für die eigentlichen Bearbeitungsvorgänge.

Die bekannten Maschinen mit Verputzeinrichtungen und Wendeeinrichtungen haben an sich den Vorteil, daß derartige Maschinen wenig auf die jeweiligen Abmessungen der einzelnen Rahmen Rücksicht nehmen müssen. Es können große und kleine Rahmen in gleicher Weise bearbeitet werden. Allerdings ist der Platzbedarf der Maschine wegen des Platzbedarfes für die Wendemanöver verhältnismäßig groß. Dies gilt sowohl in der Haupttransportrichtung, mit der die Fensterrahmen durch die Maschine gefördert werden, als auch rechtwinklig hierzu.

Bei den bekannten Schweißraupenverputzmaschinen läßt sich eine Beschleunigung der Wendemanöver nur schwierig erreichen. Die Fördermittel für das Wendemanöver erfassen den Fensterrahmen in der Nähe des Ecks, so daß die Wendemanöver nicht wesentlich beschleunigt werden können, daß bei raschen Bewegungen erhebliche Massenkräfte auftreten, die die Rahmen beschädigen könnten. Auch würde bei raschen Wendemanövern die Unfallgefahr zunehmen.

Der Erfindung liegt die Aufgabe zugrunde, eine Verputzmaschine der eingangs beschriebenen Gattung derart zu verbessern, daß die Verweildauer eines Rahmens in der Maschine zum Zwecke der Bearbeitung der Schweißraupen wesentlich abgekürzt wird.

Zur Lösung dieser Aufgabe wird erfindungsgemäß vorgeschlagen, daß die Maschine einen oberen und einen unteren Träger aufweist, an denen die Verputzwerkzeuge in mindestens zwei Richtungen in einer Ebene bewegbar sind, um einerseits in die Bearbeitungspositionen bezüglich der Schweißraupen zu gelangen und um sich andererseits beim Verputzen parallel zu den Schweißraupen zu bewegen, während der Fensterrahmen im wesentlichen translatorisch in dem Raum zwischen den Trägern bewegbar ist.

Bei der Erfindung ist es nicht mehr notwendig, daß mit den einzelnen Fensterrahmen Wendemanöver ausgeführt werden. Wenn ein einfacher, aus vier Rahmenteilen bestehender Rahmen, bearbeitet werden soll, wird dieser Rahmen in die erste Bearbeitungsposition gebracht, in der mindestens eine Eckverbindung, vorzugsweise jedoch die Eckverbindungen an den Enden eines Rahmenteils bearbeitet werden können. Die Bearbeitungswerkzeuge können sich dabei, wenn erforderlich, von der einen Eckverbindung zur anderen Eckverbindung bewegen.

Durch eine einfache translatorische Bewegung gelangt der Rahmen in eine weitere Bearbeitungsposition, und in der Regel ist es dann schon möglich, den Rahmen fertig zu bearbeiten. Es ist klar, daß bei der Erfindung viel weniger Rahmenbewegungen notwendig sind als beim Stande der Technik, und daß es auch möglich ist, die wenigen Rahmenbewegungen relativ rasch durchzuführen. Die Bearbeitungszeit läßt sich hierdurch wesentlich vermindern.

Ein wesentlicher Vorteil der Erfindung besteht darin, daß der Platzbedarf insbesondere in der Transportrichtung ganz beträchtlich reduziert ist. Während sich der eine Fensterrahmen in der Bearbeitungsposition befindet, kann beispielsweise der nächstfolgende Rahmen schon auf der zugehörigen Fördereinrichtung angeordnet werden, so daß der Wechsel der einzelnen zu bearbeitenden Fensterrahmen rasch vor sich geht. Die translatorische Bewegung kann auch dazu benützt werden, die schon bearbeiteten Fensterrahmen weiterzuschieben, wodurch sich der Bauaufwand verringert.

Die Erfindung bevorzugt eine Bauweise, bei der die Transportrichtung der Fensterrahmen parallel zu einem Rahmenteil ausgerichtet ist, so daß also beispielsweise bei einem aus vier Rahmenteilen bestehenden Fenster nur zwei Bearbeitungspositionen notwendig sind. Bei dieser Anordnung verlaufen die zu bearbeitenden Schweißraupen in einem Winkel von 45 Grad zur Transportrichtung. Die erforderliche Bewegung der Verputzwerkzeuge läßt sich dann durch eine gesteuerte Bewegung der Werkzeuge in den beiden vorgesehenen Richtungen erreichen, wobei die beiden Bewegungsrichtungen in der Regel in der Ebene der Fensterrahmen erfolgen.

Es ist aber auch möglich, beispielsweise einen Fensterrahmen parallel zur Ausrichtung der Schweißraupen zu bewegen, was aber weniger empfehlenswert ist, weil sich dann mehr Bearbeitungspositionen ergeben.

Günstig ist es, wenn die Träger als Brücken ausgebildet sind. Die Steifheit der Maschine wird hierdurch beträchtlich gesteigert. Zwischen den beiden Brücken verläuft die Transportebene der Fensterrahmen.

Bei einer Ausbildungsform der Erfindung sind die Verputzwerkzeuge oberhalb und unterhalb des Fensterrahmens gleichgerichtet angetrieben. Die Verputzwerkzeuge bearbeiten hierbei gleichzeitig die Schweißraupen einer Eckverbindung. Besser ist es jedoch, wie die Erfindung weiter vorsieht, wenn die Verputzwerkzeuge oberhalb und unterhalb des Fensterrahmens gegengerichtet angetrieben sind, derart, daß die oberen Verputzwerkzeuge die Schweißraupen an der einen Rahmenecke bearbeiten, während die unteren Verputzwerkzeuge die Schweißraupen am gegenüberliegenden Rahmeneck bearbeiten. Auf diese Weise läßt sich erreichen, daß die Bearbeitungsvorgänge auf beiden Seiten des Fensterrahmens ohne Kollisionsgefahr der einzelnen Verputzwerkzeuge durchgeführt werden können. Dennoch entsteht hierbei keine Verlängerung der Bearbeitungsdauer.

Bei einer bevorzugten Bauweise der Erfindung ist am Träger bzw. an der Brücke je ein Hauptschlitten längs verfahrbar, wobei am Hauptschlitten ein die Verputzwerkzeuge tragender Nebenschlitten beweglich ist, und zwar vorzugsweise rechtwinklig zur Verfahrrichtung des Hauptschlittens am Träger bzw. an der Brücke.

Um die Verputzwerkzeuge in Bearbeitungsposition zu bringen, schlägt die Erfindung vor, daß die Verputzwerkzeuge am Nebenschlitten rechtwinklig zur Rahmenebene beweglich sind. Diese Anordnung ist einer Höhenbeweglichkeit des Trägers bzw. der Brücke bzw. eine Beweglichkeit des Nebenschlittens am Hauptschlitten rechtwinklig zur Rahmenebene vorzuziehen.

Mittels der Erfindung ist es nicht nur möglich, Eckverbindungen bei einem aus vier Rahmenteilen bestehenden Fensterrahmen zu bearbeiten. Mittels der erfindungsgemäßen Maschine können ohne weiteres auch eingeschweißte Kämpfer bearbeitet werden. Zu diesem Zweck ist es nur notwendig, das Bearbeitungsprogramm sinngemäß so zu steuern, daß die Schlitten beispielsweise bei ihrer Bewegung längs des Trägers bzw. der Brücke die entsprechenden Bearbeitungspositionen einnehmen oder auch, daß der Vorschub der Fensterrahmen sinngemäß an der geeigneten Stelle, die der Lage des Kämpfers entspricht, angehalten und der Fensterrahmen positioniert wird. Es ist klar, daß auf diese Weise auch verhältnismäßig komplizierte Fensterrahmen bearbeitet werden können.

Die erfindungsgemäße Maschine kann nicht nur dazu benützt werden, die Schweißraupen zu verputzen. Wenn, wie die Erfindung weiter vorschlägt, die Schlitten, und zwar insbesondere die Nebenschlitten, zusätzliche Werkzeuge zur Bearbeitung des Fensterrahmens tragen, können beispielsweise auch Bohrungen für Beschlagteile am Fensterrahmen angebracht werden.

In der Zeichnung ist ein Ausführungsbeispiel der Erfindung schematisch dargestellt. Es zeigen:

Fig. 1    eine Ansicht einer erfindungsgemäßen Maschine in Förderrichtung der Fensterrahmen,

Fig. 2    einen Schnitt durch die Darstellung der Fig. 1 entsprechend der Schnittlinie II-II,

Fig. 3    eine Draufsicht auf einen Fensterrahmen, wie dieser in der erfindungsgemäßen Maschine bearbeitet werden kann.

Im gezeigten Ausführungsbeispiel besteht die Maschine aus einem Gestell 1, das eine obere Brücke 2 und eine untere Brücke 3 trägt. Das Gestell ist ortsfest angeordnet und auch die Brücken 2 und 3 sind starr mit dem Gestell 1 verbunden. In besonderen Fällen ist es jedoch möglich, das Gestell 1 oder auch die Brücken 2 und 3 in der Transportrichtung der Fensterrahmen, also senkrecht zur Bildebene zu bewegen. Die starre Anordnung ist jedoch in der Regel zu bevorzugen.

Sowohl an der Brücke 2 als auch an der Brücke 3 sind in an sich bekannten Führungen 4 und 5 Schlitten beweglich, und zwar jeweils ein Hauptschlitten 6, der sich längs der Brücke 2 bzw. der Brücke 3 bewegt, angeordnet. Der Hauptschlitten 6 trägt jeweils einen Nebenschlitten 7 und 17, der gegenüber dem Hauptschlitten in der Förderrichtung der Fensterrahmen verschiebbar ist.

Am Nebenschlitten 7 der oberen Brücke 2 sind die Verputzwerkzeuge 8 und 9 gelagert. Das Verputzwerkzeug 8 ist als Scheibenfräser ausgebildet, das Verputzwerkzeug 9 als Bohrer. Die Verputzwerkzeuge sind in vertikaler Richtung am Nebenschlitten 7 beweglich, können also in Richtung der Ebene des Fensterrahmens vorgeschoben werden.

In gleicher Weise trägt auch der Nebenschlitten 17 der unteren Brücke 3 Verputzwerkzeuge 11 und 12, wobei das Verputzwerkzeug 11 als Bohrer ausgebildet ist, während das Verputzwerkzeug 12 als Stechmesser gestaltet ist. Die Ausbildung der Verputzwerkzeuge ist an sich bekannt.

Zwischen der oberen Brücke 2 und der unteren Brücke 3 ist eine Fördereinrichtung 13 bzw. 14 angeordnet, die dazu dient, die zu bearbeitenden Fensterrahmen 10 heranzufördern und nach der Bearbeitung abzufördern. Die Fördereinrichtung 13 bzw. 14 kann ein Förderband sein, es ist aber auch eine andere Ausgestaltung eines Fördermittels anwendbar. Werden Förderbänder benützt, empfiehlt es sich, diese im Bereich der Verputzwerkzeuge zu unterbrechen, um Kollisionen auszuschließen.

Mit 15 und 16 sind Einrichtungen zur Positionierung bezeichnet, die dazu dienen, die Fensterrahmen in der vorgegebenen Bearbeitungsposition festzuhalten und festzuspannen.

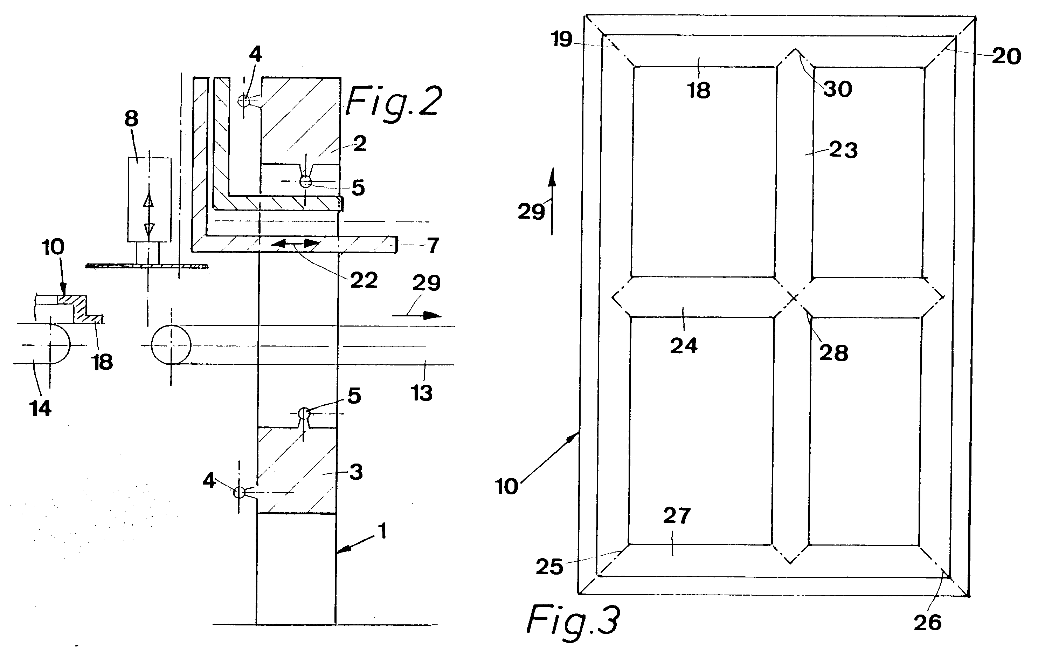

Beim Betrieb der erfindungsgemäßen Maschine wird zunächst ein Fensterrahmen in Richtung des Pfeiles 29 herangefördert, bis der vordere Rahmenteil 18 (vgl. Fig. 3) die gewünschte Bearbeitungsposition erreicht hat. Die Positioniereinrichtungen 15 und 16 bzw. die zugehörigen Spannmittel halten den Fensterrahmen 10 in der gewünschten Bearbeitungsposition, so daß die Schweißraupen 19 und 20 bearbeitet werden können.

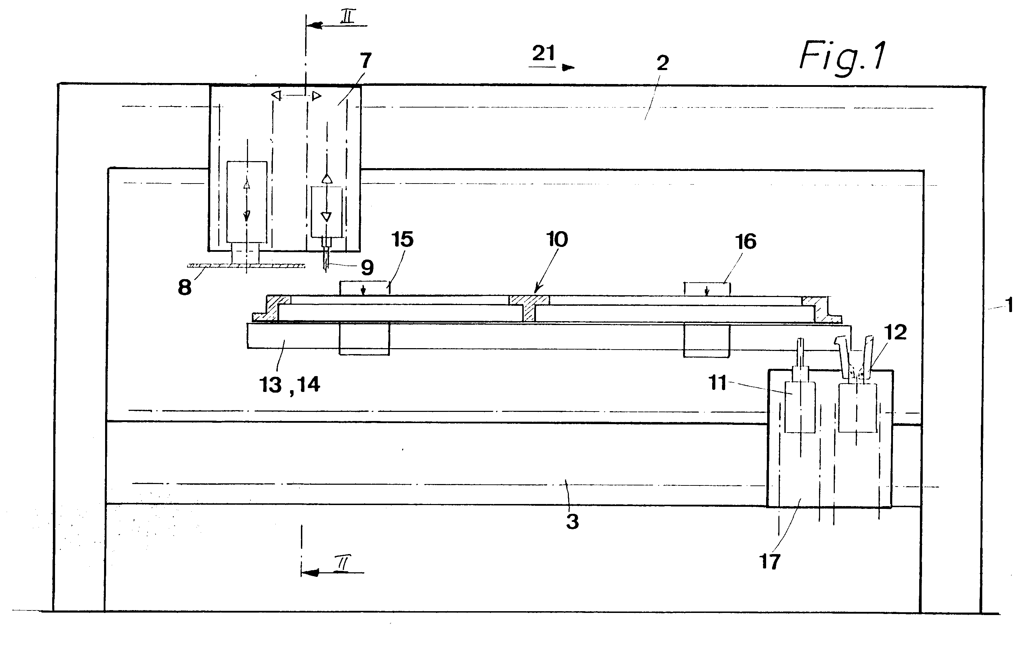

Um eine Verschiebung der Bearbeitungswerkzeuge in Richtung der Schweißraupen 19 bzw. 20 zu erreichen, erfolgt ein sinngemäßer Antrieb des Hauptschlittens 6 in Richtung des Pfeiles 21 und des Nebenschlittens gegenüber dem Hauptschlitten in Richtung des Pfeiles 22. Dabei wird derart vorgegangen, daß sich zunächst die Bearbeitungswerkzeuge in der Stellung befinden, die in der Fig. 1 angedeutet ist, so daß die Bearbeitungswerkzeuge an der oberen Brücke 2 zunächst die Schweißraupe 19 auf der Oberseite des Fensterrahmens 10 bearbeiten, während die Bearbeitungswerkzeuge an der unteren Brücke 3 zunächst die Schweißraupe 20 an der Unterseite des Fensterrahmens 10 bearbeiten. Sind die Bearbeitungsvorgänge abgeschlossen, werden die Hauptschlitten 6 gegenläufig angetrieben, so daß die oberen Bearbeitungswerkzeuge nunmehr die Schweißraupe 20 auf der Oberseite, die Bearbeitungswerkzeuge an der unteren Brücke 3 nunmehr die Schweißraupe 19 an der Unterseite des Fensterrahmens bearbeiten können.

Besitzt der Fensterrahmen 10 einen eingeschweißten Kämpfer bzw. Längspfosten 23, wird die Verschiebungsbewegung des jeweiligen Hauptschlittens 6 sinngemäß angehalten, so daß auch die Schweißraupen 30 zwischen dem Längspfosten 23 und dem Rahmenteil 18 bearbeitet werden können. Dies gilt sowohl für die Schweißraupen auf der Oberseite als auch auf der Unterseite des Fensterrahmens 10.

Sind die Bearbeitungsvorgänge am Rahmenteil 18 abgeschlossen, werden die Festspanneinrichtungen, die auf den Fensterrahmen 10 wirken gelöst und die Fördereinrichtungen 13 bzw. 14 fördern den Fensterrahmen weiter, so daß gegebenenfalls die Schweißraupen am Querpfosten 24 bearbeitet werden können. Anschließend erfolgt ein weiterer Vorschub des Fensterrahmens 10, bis sich die Schweißraupen 25 und 26 des hinteren Rahmenteiles 27 in Bearbeitungsposition befinden.

Es ist klar, daß es bei der Erfindung ohne weiteres möglich ist, bei der Bearbeitung der Schweißraupen am Querpfosten 24 auch die Schweißraupen 28 zu bearbeiten, die den Querpfosten 24 mit dem Längspfosten 23 verbinden. Bei den bisher bekannten Maschinen des Standes der Technik war es nicht möglich, Schweißnähte an solchen Rahmenteilen zu bearbeiten.

Im gezeigten Ausführungsbeispiel befindet sich der Fensterrahmen 10 während der Bearbeitung in einer horizontalen Lage. Es ist aber auch möglich, die Ebene des Fensterrahmens beispielsweise geneigt oder senkrecht anzuordnen, welcher Lage dann auch die Ausrichtung der Träger bzw. Brücken 2 und 3 anzupassen ist. Die Hauptschlitten 6 sind dann nicht mehr in horizontaler Richtung beweglich, sondern sinngemäß in einer Ebene, die parallel ist zu der Ebene des Fensterrahmens.

**Patentansprüche**

1. Maschine zum Verputzen von Schweißraupen, die beim Verschweißen von Kunststoffprofilen zu Fensterrahmen oder dergleichen entstehen, wobei die Verputzwerkzeuge auf beiden Seiten des Fensterrahmens parallel zu den Schweißraupen bewegbar sind, mit Einrichtungen zum Bewegen der Fensterrahmen in die einzelnen Bearbeitungspositionen und Einrichtungen zum Fixieren der Fensterrahmen in den Bearbeitungspositionen, dadurch gekennzeichnet, daß die Maschine einen oberen und einen unteren Träger (2, 3) aufweist, an denen die Verputzwerkzeuge (8, 9, 11, 12) in mindestens zwei Richtungen in einer Ebene bewegbar sind, um einerseits in die Bearbeitungspositionen bezüglich der Schweißraupen zu gelangen und um sich andererseits beim Verputzen parallel zu den Schweißraupen zu bewegen, während der Fensterrahmen (10) im wesentlichen translatorisch in dem Raum zwischen den Trägern bewegbar ist.

2. Maschine nach Anspruch 1, dadurch gekennzeichnet, daß die Träger als Brücken (2, 3) ausgebildet sind.

3. Maschine nach einem oder beiden der vorhergehenden Ansprüche, dadurch gekennzeichnet, daß die Transportrichtung des Fensterrahmens parallel zu einem Rahmenteil (18) ausgerichtet ist.

4. Maschine nach einem oder mehreren der vorhergehenden Ansprüche, dadurch gekennzeichnet, daß die Verputzwerkzeuge oberhalb und unterhalb des Fensterrahmens (10) gleichgerichtet angetrieben sind.

5. Maschine nach einem oder mehreren der vorhergehenden Ansprüche, dadurch gekennzeichnet, daß die Verputzwerkzeuge oberhalb und unterhalb des Fensterrahmens (10) gegengerichtet angetrieben sind, derart, daß die oberen Verputzwerkzeuge (8, 9) die Schweißraupe an der einen Rahmenecke bearbeiten, während die unteren Verputzwerkzeuge (11, 12) die Schweißraupen am gegenüberliegenden Rahmenende bearbeiten.

6. Maschine nach einem oder mehreren der vorhergehenden Ansprüche, dadurch gekennzeichnet, daß am Träger je ein Hauptschlitten (6) längs verfahrbar ist und am Hauptschlitten ein die Verputzwerkzeuge tragender Nebenschlitten (7, 17) beweglich ist, und zwar vorzugsweise rechtwinklig zur Verfahrrichtung des Hauptschlittens am Träger.

7. Maschine nach einem oder mehreren der vorhergehenden Ansprüche, dadurch gekennzeichnet, daß die Verputzwerkzeuge am Nebenschlitten (7, 17) rechtwinklig zur Rahmenebene beweglich sind.

8. Maschine nach einem oder mehreren der vorhergehenden Ansprüche, dadurch gekennzeichnet, daß die Schlitten, insbesondere die Nebenschlitten (7, 17), zusätzlich Werkzeuge zur Bearbeitung des Fensterrahmens tragen.

**Claims**

1. Apparatus for removing burrs generated when welding plastic profiles to window frames or the like, with the burr removing tools being movable parallel to the burrs on both sides of the window frame, with devices for moving the window frames to the different machining positions and devices for retaining the window frames in the machining position characterized in that the apparatus shows an upper and a lower support (2, 3) on which the burr removing tools (8, 9, 11, 12) are movable in at least two directions in one plane, on the one hand in order to reach the machining positions relative to the burrs, and on the other hand in order to move parallel to the burrs upon removing them, with the window frame (10) being substantially translationally movable in the space between the supports.

2. Apparatus according to claim 1 characterized in that the supports are shaped as bridges (2, 3).

3. Apparatus according to one or two of the preceding claims characterized in that the direction of transport of the window frame is oriented parallel to one frame part (18).

4. Apparatus according to one of the preceding claims characterized in that the burr removing tools above and below the window frame (10) are driven in the same direction.

5. Apparatus according to one of the preceding claims characterized in that the burr removing tools above and below the window frame (10) are driven in opposite directions, in such a way that the upper burr removing tools (8, 9) machine one corner of the frame, while the lower burr removing tools machine the burrs on the opposite end of the frame.

6. Apparatus according to one of the preceding claims characterized in that one main slide (6) is longitudinally displaceable on each support and a secondary slide (7, 17) supporting the burr removing tools is movable on the main slide, preferably at right angles to the direction of displacement of the main slide on the support.

7. Apparatus according to one of the preceding claims characterized in that the burr removing tools on the secondary slide (7, 17) are movable at right angles to the plane of the frame.

8. Apparatus according to one of the preceding claims characterized in that the slides, particularly the secondary slides (7, 17) additionally support tools for machining the window frame.

**Revendications**

1. Machine pour enlever des bavures de soudure consécutives au soudage de profilés de matière plastique en châssis de fenêtre ou analogues, les outils d'ébarbage pouvant être déplacés des deux côtés du châssis de fenêtre parallèlement aux bavures, comprenant des dispositifs pour amener les châssis de fenêtre dans les différentes positions d'usinage et des dispositifs pour fixer les châssis de fenêtre dans lesdites positions d'usinage, **caractérisée en ce** que la machine comporte un support supérieur et un support inférieur (2, 3) sur lesquels les outils d'ébarbage (8, 9, 11, 12) peuvent être déplacés dans un plan, dans au moins deux directions, à savoir d'une part pour parvenir dans les positions d'usinage par rapport aux bavures de soudure et d'autre part pour se déplacer lors de l'élabarbage parallèlement aux bavures de soudure, tandis que le châssis de fenêtre (10) peut être animé sensiblement d'un mouvement de translation dans l'espace entre lesdits supports.

2. Machine selon la revendication 1, caractérisée en ce que les supports sont conformés en ponts (2, 3).

3. Machine selon l'une quelconque des revendications précédentes, caractérisée en ce que le dispositif de transport du châssis de fenêtre est orienté parallèlement à un élément de châssis (18).

4. Machine selon l'une quelconque des revendications précédentes, caractérisée en ce que les outils d'ébarbage au-dessus et en dessous du châssis de fenêtre (10) sont entraînés dans le même sens.

5. Machine selon l'une quelconque des revendications précédentes, caractérisée en ce que les outils d'ébarbage au-dessus et en dessous du châssis de fenêtre (10) sont entraînés en sens opposé de manière que les outils d'ébarbage supérieurs (8, 9) enlèvent la bavure de soudure dans l'un des coins du châssis, tandis que les outils d'ébarbage inférieurs (11, 12) éliminent les bavures de soudure à l'extrémité opposée du châssis.

6. Machine selon l'une quelconque des revendications précédentes, caractérisée en ce que respectivement un chariot principal (6) peut être déplacé dans le sens longitudinal sur le support et que sur le chariot principal peut se déplacer un chariot secondaire (7, 17) portant les outils d'ébarbage, à savoir de préférence orthogonalement à la direction de déplacement du chariot principal sur le support.

7. Machine selon l'une quelconque des revendications précédentes, caractérisée en ce que les outils d'ébarbage sur le chariot secondaire (7, 17) peuvent se déplacer orthogonalement au plan du châssis.

8. Machine selon l'une quelconque des revendications précédentes, caractérisée en ce que les chariots, en particulier les chariots secondaires (7, 17) portent, en plus, des outils pour l'usinage du châssis de fenêtre.

Fig.1

EP 0 320 624 B1

Fig.2

Fig.3

EP 0 320 624 B1